# EUROPÄISCHE PATENTSCHRIFT

(11) **EP 2 746 104 B1**
(45) Veröffentlichungstag und Bekanntmachung des Hinweises auf die Patenterteilung: **15.05.2019**
(21) Anmeldenummer: 13193781.5
(22) Anmeldetag: 21.11.2013
(51) Int. Cl.: B60Q 1/076

(54) **Verfahren zum Betreiben einer elektrischen Stellvorrichtung zur Variation einer Charakteristik eines von einem Scheinwerfer eines Kraftfahrzeugs ausgesandten Lichtbündels**
Method for operating an electric actuator for variation of a characteristic of a light beam emitted by a motor vehicle headlight
Procédé de fonctionnement d'un dispositif de réglage électrique pour la variation d'une caractéristique d'un faisceau lumineux émis par un phare d'un véhicule automobile

(30) Priorität: 20.12.2012 DE 102012223995
(43) Veröffentlichungstag der Anmeldung: 25.06.2014
(73) Patentinhaber: Automotive Lighting Reutlingen GmbH, 72762 Reutlingen (DE)
(72) Erfinder: Horsten, Jan, 75622 Nürtingen (DE)
(74) Vertreter: DREISS Patentanwälte PartG mbB

(56) Entgegenhaltungen:
- EP-A1- 1 403 136
- EP-A1- 1 686 006
- EP-A2- 1 077 526
- EP-A2- 1 316 474
- DE-A1- 2 053 660
- DE-A1- 2 055 641
- DE-A1- 2 809 451
- GB-A- 2 101 768
- US-A1- 2004 085 780

## Beschreibung

Die vorliegende Erfindung betrifft ein Verfahren zum Betreiben einer elektrischen Stellvorrichtung, die zur Variation einer Charakteristik eines von einem Lichtmodul eines Scheinwerfers eines Kraftfahrzeugs ausgesandten Lichtbündels dient. Dabei wird die Stellvorrichtung oder mindestens ein Teil davon im Rahmen einer Referenzierung zur Ermittlung einer Referenzposition der Stellvorrichtung ausgehend von einer beliebigen Ausgangsposition in eine definierte Endposition bewegt und die Endposition als Referenzposition herangezogen. Außerdem betrifft die Erfindung einen Kraftfahrzeugscheinwerfer mit einem Lichtmodul zum Aussenden eines Lichtbündels, mit einer elektrischen Stellvorrichtung zur Variation einer Charakteristik des Lichtbündels und mit einem Steuergerät zur Ansteuerung der Stellvorrichtung. Dabei ist das Steuergerät zur Ermittlung einer Referenzposition der Stellvorrichtung im Rahmen einer Referenzierung ausgebildet, wobei das Steuergerät eine Bewegung der Stellvorrichtung ausgehend von einer beliebigen Ausgangsposition in eine definierte Endposition veranlasst und die Endposition als Referenzposition heranzieht, und wobei das Steuergerät eine zur Ansteuerung der Stellvorrichtung eingesetzte Treibereinrichtung mit einer internen Diagnosemöglichkeit zur Detektion elektrischer Defekte der Stellvorrichtung aufweist.

Ein derartiges Verfahren und ein derartiger Scheinwerfer ist bspw. aus der EP 1 403 136 A1 bekannt.

Kraftfahrzeugscheinwerfer umfassen in der Regel ein Gehäuse, vorzugsweise aus Kunststoff, in dem eines oder mehrere Lichtmodule zur Erzeugung einer gewünschten Lichtverteilung auf. Es ist denkbar, dass ein Scheinwerfer mehrere Lichtmodule umfasst, die jeweils unterschiedliche Lichtverteilungen erzeugen, bspw. Abblendlicht, Fernlicht, Nebellicht oder eine adaptive Lichtverteilung (z.B. Stadtlicht, Autobahnlicht, Schlechtwetterlicht, etc.). Es ist aber auch denkbar, dass eine Lichtverteilung durch Überlagerung von mehreren Teillichtverteilungen erzeugt wird, die jeweils von einem der Lichtmodule erzeugt werden.

Zur Erzeugung einer variablen Lichtverteilung, bspw. in Form einer Leuchtweitenreglung, einer dynamischen Kurvenlichtfunktion oder einer abgeblendeten Lichtverteilung mit variabler Helldunkelgrenze, ist es bekannt, eines oder mehrere der Lichtmodule oder Teile davon verstellbar auszugestalten. So ist es bspw. denkbar, zur Realisierung einer Leuchtweitenregelung ein Lichtmodul um eine horizontale Achse verschwenkbar auszugestalten. Dementsprechend kann zur Realisierung einer dynamischen Kurvenlichtfunktion ein Lichtmodul um eine vertikale Achse verschwenkbar ausgestaltet werden.

Die Variabilität einer Helldunkelgrenze einer abgeblendeten Lichtverteilung kann sich auf die Lage sowie auf den Verlauf der Helldunkelgrenze beziehen. Zur Variation einer Helldunkelgrenze ist es bspw. denkbar, eine im Strahlengang angeordnete Blendenwalze, auf deren Umfangsfläche unterschiedliche Blendenkonturen ausgebildet sind, um eine horizontale Achse drehbar auszugestalten (vgl.
EP 0 935 728 B1), oder aber verschiedene Blendenelemente mit unterschiedlichen Blendenkonturen in einer vertikalen Ebene mehr oder weniger weit in den Strahlengang zu bewegen (vgl. DE 10 2005 012 303 A1).

Als Charakteristik des Lichtbündels wird zum Beispiel dessen Ausrichtung, die Form des Lichtbündels, die Lichtverteilung innerhalb des Lichtbündels, insbesondere die Beleuchtungsstärkeverteilung und/oder der Verlauf einer Helldunkelgrenze, oder eine beliebige Kombination dieser Charakteristika bezeichnet. Zur Variation der Charakteristik des von dem Lichtmodul eines Scheinwerfers ausgesandten Lichtbündels ist es aus dem Stand der Technik bekannt, eine Stellvorrichtung einzusetzen, welche das Lichtmodul oder Teile davon verstellt. Die Stellvorrichtung wird in der Regel von einem Steuergerät angesteuert, welches die Ansteuersignale entweder aufgrund von Befehlen des Fahrers oder selbstständig und automatisch, bspw. aufgrund des Ergebnisses einer Auswertung von Bildern einer Kamera zum Erfassen der Fahrzeugumgebung, aufgrund von Lenkwinkelsensorsignale oder aufgrund von anderen Sensorsignalen, generiert. Die Stellvorrichtung umfasst in der Regel einen Elektromotor, bspw. einen Schrittmotor, und einen Lineartrieb, insbesondere in Form eines Spindeltriebs, um die Drehbewegung des Motors in eine lineare Betätigungsbewegung eines Betätigungselements umzusetzen.

Die eingesetzten Schrittmotoren umfassen mindestens eine statische Magnetspule und mindestens einen Permanentmagneten, der drehfest mit dem Rotor verbunden ist. Durch Ansteuerung der Spule mit einem geeigneten Ansteuersignal kann in der Spule ein Magnetfeld mit wechselnder Ausrichtung generiert werden, das auf den Permanentmagnet wirkt und den Rotor dadurch in eine Drehbewegung versetzt. Die Drehbewegung des Schrittmotors wird mittels des Lineartriebs in eine lineare Betätigungsbewegung zum Verstellen des Lichtmoduls bzw. der Teile davon umgesetzt. Ein geeignetes Ansteuersignal hat eine in einer bestimmten Frequenz wechselnde Polarität, wobei der Abstand zwischen zwei aufeinanderfolgenden Signalabschnitten gleicher Polarität (sog. Pulsen) als ein Schritt bezeichnet wird.

Die eingesetzten Stellvorrichtungen geben in der Regel keine Positionsrückmeldung an das Steuergerät. Deshalb werden in dem Steuergerät die Schritte des Ansteuersignals gezählt, die der Stellvorrichtung vorgegeben werden. Anhand der Schrittanzahl kann in der Regel auf die aktuelle Position der Stellvorrichtung geschlossen werden, sofern von einer bekannten Anfangsposition, der sog. Referenzposition, ausgegangen wird und der Schrittmotor für jeden Schritt des Ansteuersignals auch tatsächlich die vorgesehene Drehbewegung ausführt, es also nicht zu Schrittverlusten kommt, bspw. wenn der Schrittmotor schwergängig oder gar blockiert ist.

Nach dem Einschalten des Steuergeräts, d.h. nach dem Aktivieren der Zündung bzw. nach dem Einschalten des Scheinwerfers oder der entsprechenden Lichtfunktion, befindet sich das System in einem undefinierten Zustand. Daher muss eine sog. Referenzierung durchgeführt werden. Eine Referenzierung kann unter Umständen auch während des Betriebs des Scheinwerfers erforderlich sein, bspw. um eventuell auftretende Schrittverluste zu kompensieren. Um die definierte Referenzposition zu ermitteln sind aus dem Stand der Technik im Wesentlichen zwei Möglichkeiten bekannt.

Bei dem üblicherweise in Kraftfahrzeugscheinwerfern eingesetzten Verfahren zur Referenzierung wird die Stellvorrichtung ausgehend von der undefinierten Ausgangsposition bis zum Erreichen eines mechanischen Anschlags (Endposition) bewegt. Dies ist bspw. in der DE 198 23 487 A1 beschrieben. Durch das Steuergerät wird dazu eine Positionsänderung (Ansteuersignal mit einer entsprechenden Anzahl von Schritten) vorgegeben, die größer ist als der gesamte maximal mögliche Stellweg der Stellvorrichtung, damit sichergestellt ist, dass der Anschlag aus jeder beliebigen Anfangsposition erreicht werden kann. Nach dem Ansteuern der Stellvorrichtung mit dem der Positionsänderung entsprechenden Ansteuersignal wird im Steuergerät davon ausgegangen, dass der Anschlag und damit die Endposition erreicht ist. Die aktuelle Position der Stellvorrichtung wird dann als Referenzposition herangezogen.

Diese Vorgehensweise hat verschiedene Nachteile. Da sich die Stellvorrichtung in der Regel in einer mittleren Position befindet, erreicht die Stellvorrichtung den Anschlag bereits vor dem Ende der Ansteuerung mit dem der vorgegebenen Positionsänderung entsprechenden Ansteuersignal. Das führt dazu, dass die Stellvorrichtung gegen Ende der Referenzierung mehrfach gegen den Anschlag fährt, was ein lautes Geräusch und einen mechanische Belastung der Stellvorrichtung bedeutet. Zudem dauert der Vorgang der Referenzierung stets gleich lang, selbst wenn die Anfangsposition der Stellvorrichtung in der Nähe des mechanischen Anschlags befindet, da die Stellvorrichtung stets mit dem gesamten der Positionsänderung entsprechenden Signal angesteuert wird, selbst wenn der Anschlag bereits zu Beginn der Referenzierung erreicht worden ist. Außerdem ist es mit dem bekannten Verfahren nicht möglich, eine Schwergängigkeit oder ein Blockieren der Stellvorrichtung zu erkennen. Nach dem Ende der Ansteuerung der Stellvorrichtung mit dem der vorgegebenen Positionsänderung entsprechenden Ansteuersignal wird stets davon ausgegangen, dass die Referenzposition erreicht ist. Bei einer schwergängigen oder blockierenden Stellvorrichtung kann dies nicht der Fall sein, ohne dass dies detektiert werden könnte.

Um diese Nachteile zu vermeiden ist es ebenfalls aus dem Stand der Technik bekannt, einen Hall-Sensor einzusetzen, um die Position der Stellvorrichtung zu ermitteln. Hall-Sensoren haben jedoch den Nachteil, dass sie relativ teuer in der Anschaffung sind und einen großen schaltungstechnischen Aufwand (Außenbeschaltung, Signalverstärkung Stromversorgung) für deren Betrieb und zum Auswerten des Sensorsignals erfordern.

Ausgehend von dem beschriebenen Stand der Technik liegt der vorliegenden Erfindung die Aufgabe zugrunde, ohne großen konstruktiven und/oder finanziellen Zusatzaufwand die Referenzierung eines Scheinwerfers zu verbessern.

Die Aufgabe wird ausgehend von dem Verfahren der eingangs genannten Art dadurch gelöst, dass
- während der Bewegung der Stellvorrichtung von der Ausgangsposition in die Endposition ein Schaltelement der Stellvorrichtung aktiviert wird,
- beim Erreichen der Endposition das Schaltelement automatisch schließt und ein elektrischer Defekt der Stellvorrichtung erzeugt wird,
- der elektrische Defekt der Stellvorrichtung von einer zur Ansteuerung der Stellvorrichtung eingesetzten Treibereinrichtung mit einer internen Diagnosemöglichkeit zur Detektion elektrischer Defekte der Stellvorrichtung detektiert und infolge dessen die Bewegung der Stellvorrichtung beendet und das Schaltelement deaktiviert wird,
- die Stellvorrichtung nochmals auf das Vorhandensein des elektrischen Defekts überprüft wird, und
- die aktuelle Position der Stellvorrichtung als Referenzposition herangezogen wird, falls der elektrische Defekt nach der Deaktivierung des Schaltelements nicht mehr vorhanden ist.

Es wird also vorgeschlagen, dass das Erreichen der Endposition im Rahmen der Referenzierung durch ein Schaltelement detektiert wird, das beim Erreichen der Endposition automatisch schließt und einen elektrischen Defekt der Stellvorrichtung erzeugt. Das macht die Detektion des Erreichens der Endposition besonders einfach, da die zur Ansteuerung der Stellvorrichtung über ein Steuergerät üblicherweise eingesetzten Treiber-Bausteine bereits eine interne Diagnosemöglichkeit besitzen, die es ihnen ermöglicht, elektrische Defekte (z.B. Kurzschluss, Erdung, etc.) der Stellvorrichtung zu detektieren. Bei Detektion eines solchen Defekts hält der Treiber unmittelbar an, so dass die Bewegung der Stellvorrichtung beendet wird.

Erfindungsgemäß wird also eine in gängigen Scheinwerfern mit Stellvorrichtungen bzw. in den diesen zugeordneten Treiber-Bausteinen bereits vorhandene Diagnosemöglichkeit für elektrische Defekte der Stellvorrichtung ausgenutzt, um das Erreichen des mechanischen Anschlags im Rahmen einer Referenzierung des Scheinwerfers zu detektieren. Dazu bedarf es lediglich des zusätzlichen Schaltelements, das jedoch kostengünstig und ohne großen Aufwand in die Stellvorrichtung integriert werden kann. Das Schaltelement generiert dazu beim Erreichen des mechanischen Anschlags einen simulierten elektrischen Defekt, der von dem Treiber detektiert wird.

Mit der vorliegenden Erfindung kann also das Erreichen des mechanischen Anschlags im Rahmen der Referenzierung auf einfache und kostengünstige Weise detektiert werden, ohne dass es dazu eines zusätzlichen externen Sensorelements, bspw. in Form eines Hall-Sensors, bedarf. Gegenüber den üblicherweise eingesetzten Referenzierungsverfahren hat die Erfindung die folgenden Vorteile:
- Die elektrische Ansteuerung der Stellvorrichtung mit dem Ansteuersignal und die mechanische Bewegung der Stellvorrichtung werden nach Erreichen des Anschlags unmittelbar eingestellt.
- Dadurch ergibt sich eine schnellere Referenzierung, eine geringere mechanische Belastung (keine Vibrationen) der Stellvorrichtung und ein geringeres Geräuschniveau (kein Rattern am Anschlag).
- Das Erreichen/ Nichterreichen des mechanischen Anschlags kann eindeutig erkannt werden, so dass auch eine Schwergängigkeit bzw. ein Blockieren der Stellvorrichtung detektiert werden kann.
   - Der Rotor der Stellvorrichtung ist üblicherweise mit einer integrierten Mutter gelagert. Durch eine gegen Verdrehen gesicherte Schraube fährt das Betätigungselement ein und aus. Wenn die Stellvorrichtung häufig gegen den Anschlag fährt, besteht die Gefahr, dass sich das System verkeilt bzw. verspannt und nicht mehr funktionsfähig ist. Da die Stellvorrichtung bei der Erfindung höchstens einmal gegen den Anschlag fährt, bevor das Schaltelement schließt, minimiert sich dieses Risiko erheblich.

Um einen simulierten elektrischen Defekt der Stellvorrichtung von einem tatsächlichen Defekt unterscheiden zu können, ist es denkbar, nach der Detektion eines elektrischen Defekts der Stellvorrichtung nicht einfach die aktuelle Position der Stellvorrichtung als Referenzposition heranzuziehen. Vielmehr könnte zunächst das Schaltelement deaktiviert und die Stellvorrichtung nochmals auf das Vorhandensein des elektrischen Defekts überprüft werden. Falls der elektrische Defekt nach der Deaktivierung des Schaltelements nicht mehr vorhanden ist, handelt es sich nicht um einen tatsächlichen, sondern lediglich um einen simulierten elektrischen Defekt. In diesem Fall wurde der mechanische Anschlag tatsächlich ordnungsgemäß erreicht und die aktuelle Position der Stellvorrichtung kann als Referenzposition herangezogen werden.

Falls der elektrische Defekt nach der Deaktivierung des Schaltelements jedoch noch vorhanden ist, bedeutet dies, dass ein echter elektrischer Defekt der Stellvorrichtung vorliegt. Es können die üblichen Maßnahmen getroffen werden, bspw. Deaktivieren der Stellvorrichtung, Verfahren der Stellvorrichtung in eine sichere Notposition, Deaktivieren des Lichtmoduls bzw. des Scheinwerfers, Ausgabe einer Warnmeldung an den Fahrer, etc.

Durch gezielte Aktivierung des Schaltelements besteht bei dem erfindungsgemäßen Scheinwerfer jederzeit die Möglichkeit zu prüfen, ob die Stellvorrichtung im Anschlag steht oder nicht.

Gemäß einer vorteilhaften Weiterbildung der vorliegenden Erfindung wird vorgeschlagen, dass die Stellvorrichtung einen Elektromotor mit mindestens einer Spule umfasst und dass durch das geschlossene Schaltelement ein Kurzschluss in der Spule oder in mindestens einer der Spulen als elektrischer Defekt der Stellvorrichtung erzeugt wird. Mit anderen Worten, durch das Schaltelement wird die Spule bzw. mindestens eine der Spulen des Elektromotors auf Masse gezogen. Durch Aktivierung bzw. Deaktivierung des Schaltelements wird eine niederohmige Verbindung zur Masse gesteuert. Nur wenn das Schaltelement aktiviert ist und auch noch selbst schließt wird die Spule kurzgeschlossen bzw. auf Masse gezogen. Wenn das Schaltelement deaktiviert ist, kann selbst bei geschlossenem Schaltelement der Strom wieder normal durch die Spule fließen und der Treiber erkennt eine funktionsfähige Spule, sofern nicht wirklich ein elektrischer Defekt der Spule bzw. der Stellvorrichtung vorliegt.

Gemäß einer bevorzugten Ausführungsform der Erfindung wird vorgeschlagen, dass das Schaltelement mittels eines elektrisch ansteuerbaren Schalters, insbesondere eines Transistors, aktiviert und deaktiviert wird. Der elektrisch ansteuerbare Schalter ist vorzugsweise in einem mit der Stellvorrichtung in Verbindung stehendes Steuergerät integriert. Eine zusätzliche Steuerleitung, die mittels des elektrisch ansteuerbaren Schalters mit Masse verbunden (Schalter geschlossen; Schaltelement aktiviert) wird oder nicht (Schalter offen; Schaltelement deaktiviert), verläuft von dem Steuergerät zu dem Schaltelement und weiter zu mindestens einer der Magnetspulen des Elektromotors der Stellvorrichtung. Nur wenn sowohl der elektrisch ansteuerbare Schalter als auch das in Reihe geschaltete Schaltelement geschlossen sind, wird die Spule auf Masse gezogen und der elektrische Defekt simuliert.

Zur weiteren Diagnose der Stellvorrichtung, insbesondere zur Detektion einer Schwergängigkeit bzw. eines Blockierens der Stellvorrichtung, wird vorgeschlagen, dass zu Beginn der Bewegung der Stellvorrichtung im Rahmen der Referenzierung ausgehend von der Ausgangsposition in die Endposition ein Zeitgeber gestartet wird und geprüft wird, ob die Endposition innerhalb einer vorgebbaren Zeitdauer erreicht wird. Die Zeitdauer wird vorzugsweise so gewählt, dass bei ordnungsgemäß funktionierender Stellvorrichtung die Endposition aus jeder beliebigen Anfangsposition sicher erreicht werden müsste. Falls das Schaltelement nicht innerhalb der vorgegebenen Zeitdauer schließt, d.h. die Endposition nicht innerhalb der Zeitdauer erreicht wird, liegt eine Schwergängigkeit oder gar ein Blockieren der Stellvorrichtung vor. Es können entsprechende Maßnahmen ergriffen werden.

Dementsprechend ist es auch möglich, zur weiteren Diagnose der Stellvorrichtung zu Beginn der Bewegung der Stellvorrichtung ausgehend von der Ausgangsposition in die Endposition einen Schrittzähler zu initialisieren und zu prüfen, ob die Endposition innerhalb einer vorgebbaren Anzahl von Schritten erreicht wird. Die Schritte beziehen sich dabei auf Schritte (Pulse) des Ansteuersignals. Die vorgegebene Schrittanzahl wird vorzugsweise so gewählt, dass bei ordnungsgemäß funktionierender Stellvorrichtung die Endposition aus jeder beliebigen Anfangsposition sicher erreicht werden müsste. Falls das Schaltelement nicht innerhalb der vorgegebenen Schrittanzahl schließt, d.h. die Endposition nicht innerhalb der vorgegebenen Anzahl von Schritten erreicht wird, liegt eine Schwergängigkeit oder gar ein Blockieren der Stellvorrichtung vor. Es können entsprechende Maßnahmen ergriffen werden.

Schließlich wird vorgeschlagen, dass die Stellvorrichtung einen Elektromotor und einen Lineartrieb, insbesondere in Form eines Spindeltriebs, zum Umsetzen der Drehbewegung eines Rotors des Elektromotors in eine Linearbewegung eines Betätigungselements der Stellvorrichtung aufweist, das Schaltelement einen ersten, dem bewegbaren Betätigungselement zugeordneten Schaltkontakt und zwei zweite, einem statischen Teil der Stellvorrichtung zugeordnete Schaltkontakte aufweist, wobei in der Endposition der Stellvorrichtung der erste Schaltkontakt eine elektrisch leitende Verbindung zwischen den zweiten Schaltkontakten erzeugt. Die beiden zweiten Schaltkontakte sind bspw. Bestandteil der zusätzlichen Steuerleitung, die zwischen dem Steuergerät und mindestens einer Spule des Elektromotors der Stellvorrichtung verläuft. Der Elektromotor ist bevorzugt als Schrittmotor ausgebildet.

Die zusätzliche Steuerleitung ist bevorzugt zumindest teilweise als elektrische Leiterbahn außerhalb eines Gehäuses der Stellvorrichtung technisch realisiert, wobei die Leiterbahn an einer definierten Position außerhalb des Gehäuses unterbrochen ist und dabei die beiden zweiten Schaltkontakte bilden. Das erste Schaltelement der Stellvorrichtung ist dabei auf dem bewegbaren Betätigungselement derart angeordnet, dass es die beiden zweiten Schaltkontakte in der Endposition der Stellvorrichtung elektrisch überbrückt.

Die Stellvorrichtung stellt damit eine handelsübliche Vorrichtung dar, die lediglich durch das über die weitere Steuerleitung angeschlossene Schaltelement erweitert ist. Die bekannten Stellvorrichtungen weisen in der Regel neben den vier Pins zur elektrischen Versorgung der Magnetspulen des Elektromotors bereits einen unbeschalteten zusätzlichen Pin auf, der für die weitere Steuerleitung bevorzugt verwendet werden kann. Die Stellvorrichtung ist damit durch kostengünstige Mittel im Sinne der vorliegenden Erfindung erweiterbar.

In einer alternativen Ausgestaltung der Stellvorrichtung ist auch möglich, dass die Stellvorrichtung einen Mikroschalter umfasst, der mindestens die weitere Steuerleitung durchschaltet, wenn das Stellelement die Endposition erreicht hat. Der Mikroschalter ersetzt damit das oben beschriebene Schaltelement. Die Stellvorrichtung kann mit dem Mikroschalter noch kompakter aufgebaut werden.

Weitere Merkmale und Vorteile der vorliegenden Erfindung werden nachfolgend anhand der Figuren näher erläutert. Es zeigen:
- Figur 1: eine schematische Darstellung einer Vorrichtung zur Realisierung einer Leuchtweitenregulierung in einem Scheinwerfer aus dem Stand der Technik;
- Figur 2: eine erweiterte Darstellung der Vorrichtung von Figur 1 mit einem Sensorelement zu einer Referenzierung einer Stellvorrichtung;
- Figur 3: ein Flussdiagramm mit einem Ablauf eines Verfahrens zur Referenzierung der Stellvorrichtung aus Figur 2;
- Figur 4: eine schematische Darstellung der erfindungsgemäßen Vorrichtung zur Referenzierung einer Stellvorrichtung;
- Figur 5: eine perspektivische Darstellung eines Schaltelements der Stellvorrichtung aus Figur 4;
- Figur 6: eine perspektivische Darstellung des Schaltelements aus Figur 5 als integraler Bestandteil eines Schrittmotors;
- Figur 7: ein Flussdiagramm mit einem Ablauf eines erfindungsgemäßen Verfahrens zur Referenzierung;
- Figur 8: ein Kraftfahrzeug mit zwei erfindungsgemäßen Scheinwerfern; und
- Figur 9: eine schematische Darstellung eines erfindungsgemäßen Scheinwerfers in einer Schnittdarstellung.

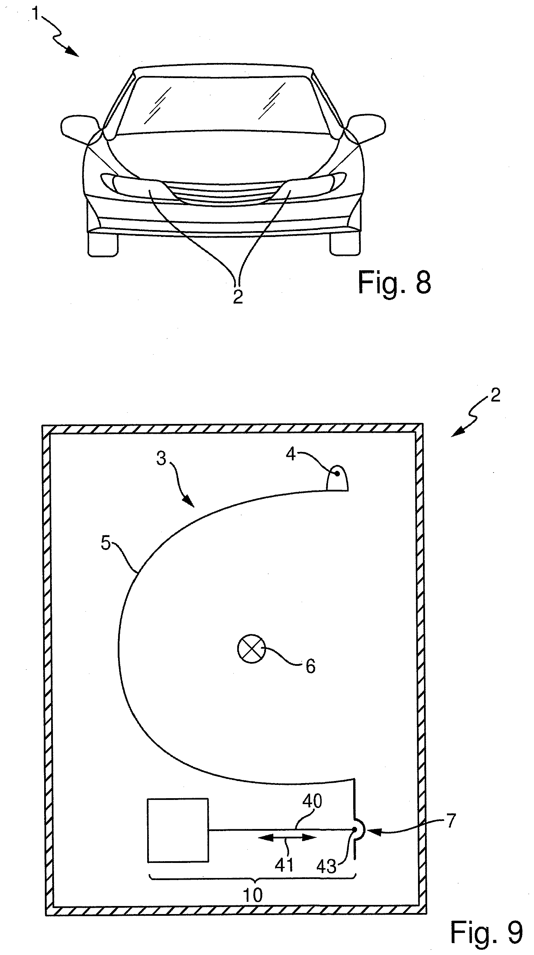

Figur 8 zeigt ein Kraftfahrzeug 1, insbesondere einen Personenkraftwagen, der im Frontbereich zwei Scheinwerfer 2 aufweist. Die Scheinwerfer 2 umfassen in der Regel ein Gehäuse, vorzugsweise aus Kunststoff, in dem eines oder mehrere Lichtmodule (in Figur 8 nicht sichtbar) zur Erzeugung einer gewünschten Lichtverteilung auf der Fahrbahn vor dem Kraftfahrzeug 1 angeordnet sind. Es ist möglich, dass der Scheinwerfer 2 mehrere Lichtmodule umfasst, die jeweils unterschiedliche Lichtverteilungen erzeugen, bspw. Abblendlicht, Fernlicht und/oder Nebellicht. Die Lichtverteilungen können auch variabel sein, wie z.B. beim dynamischen Kurvenlicht, bei der Leuchtweitenregulierung oder bei einer abgeblendeten Lichtverteilung mit variabler Helldunkelgrenze. Es ist auch denkbar, dass sich eine Gesamtlichtverteilung durch Überlagerung von mehreren Teillichtverteilungen ergibt, die jeweils von einem der Lichtmodule erzeugt werden.

Dazu sind die Lichtmodule oder Teile davon verstellbar ausgestaltet, um die Charakteristik des von dem Lichtmodul ausgesandten Lichtbündels zu variieren. So ist es bspw. denkbar, zur Realisierung einer Leuchtweitenregelung ein Lichtmodul um eine horizontale Achse verschwenkbar auszugestalten. Dementsprechend kann zur Realisierung einer dynamischen Kurvenlichtfunktion ein Lichtmodul um eine vertikale Achse verschwenkbar ausgestaltet werden.

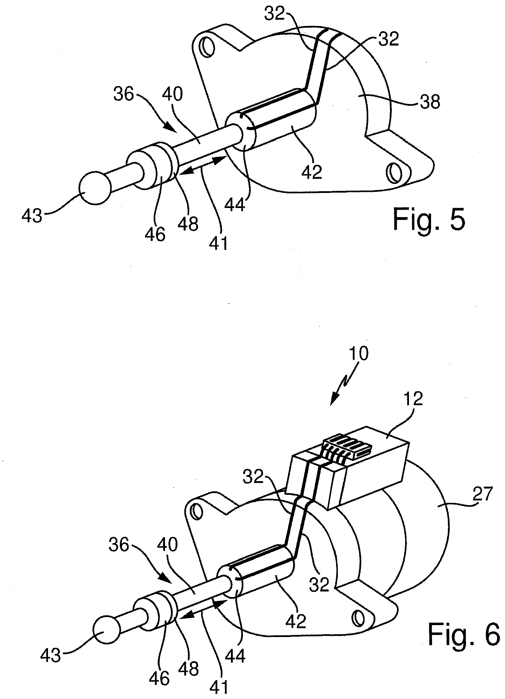

Figur 9 zeigt schematisch und beispielhaft einen Scheinwerfer 2 aus dem Stand der Technik, in dem ein Lichtmodul 3 angeordnet ist, das unter anderem zur Erzeugung einer dynamischen Leuchtweitenregulierung vorgesehen ist. Das Lichtmodul 3 weist dazu einen an einer horizontal verlaufenden Drehachse 4 angeordneten Reflektor 5 auf, in dessen Brennpunkt eine Lichtquelle 6 angeordnet ist. An einer von der Drehachse 4 abgesetzten Position 7 greift ein linear bewegliches Betätigungselement 40 (vgl. Figuren 5 und 6) z.B. mit einem Kugelkopf 43 an dem Reflektor 5 an, um diesen in Abhängigkeit der Neigung der Fahrzeugkarosserie um eine Fahrzeug-Querachse um die Drehachse 4 zu schwenken. Das Betätigungselement 40 wird durch eine Vorrichtung 10 gesteuert.

In einer weiteren nicht dargestellten Ausführungsform kann eine Drehachse alternativ oder zusätzlich auch vertikal angeordnet sein, so dass das Lichtmodul zur Erzeugung eines dynamischen Kurvenlichts horizontal schwenkbar ist. Ebenfalls denkbar ist die Erzeugung einer variablen Lichtverteilung durch Bewegen bzw. Verändern einer im Strahlengang angeordneten Blendenanordnung.

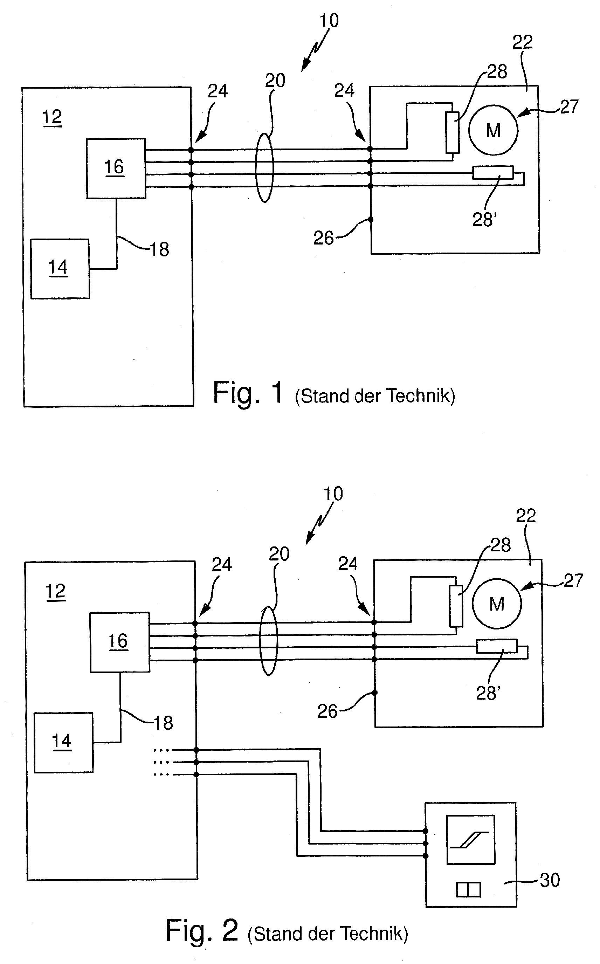

Figur 1 zeigt eine schematische Darstellung der Vorrichtung 10 zur Realisierung der Leuchtweitenregulierung im Scheinwerfer 2 aus dem Stand der Technik im Detail. Die Vorrichtung 10 weist ein Steuergerät 12 mit einem Mikroprozessor 14 und einer Treibereinrichtung 16 auf. Der Mikroprozessor 14 und die Treibereinrichtung 16 sind über ein Bussystem 18 miteinander verbunden, da sie oft voneinander entfernt angeordnet sind.

Die Treibereinrichtung 16 ist über vier Steuerleitungen 20 mit einer Stellvorrichtung 22 verbunden. Zur elektrischen Verbindung des Steuergeräts 12 mit der Stellvorrichtung 22 weisen beide Einrichtungen vier Pins 24 auf, an die die Steuerleitungen 20 angeschlossen werden. Die Stellvorrichtung 22 weist in einer handelsüblichen Ausführungsform zusätzlich einen ungenutzten Pin 26 auf.

Die Stellvorrichtung 22 weist bevorzugt einen 2-Phasen-Schrittmotor 27 auf. Er zeichnet sich dadurch aus, dass er zwei separate, voneinander elektrisch getrennte Magnetspulen 28, 28' umfasst. Die beiden Magnetspulen 28, 28' werden durch zwei jeweils phasenversetzt zueinander verlaufende Ansteuersignale beaufschlagt. Jeder Schritt des Schrittmotors 27 wird durch ein Ansteuersignal des Steuergeräts 12 angestoßen. Damit können die einzelnen Schritte auch im Steuergerät 12 gezählt und registriert werden. Der Schrittmotor 27 weist einen Rotor (nicht dargestellt) mit einem Permanentmagneten auf. Durch den Phasenversatz der beiden Ansteuersignale und die daraus resultierenden elektromagnetischen Felder wird der Permanentmagnet beziehungsweise der Rotor in eine entsprechende Drehbewegung versetzt. Anschließend wird die Rotationsbewegung des Rotors mittels einer Antriebsumsetzeinrichtung (z.B. mit einer Zahnstange und einem Ritzel) in eine Linearbewegung umgesetzt (Linearsteller), wodurch das Lichtmodul 3 oder Teile davon nach Bedarf geschwenkt werden können.

Figur 2 zeigt eine erweiterte, stark vereinfachte Darstellung der Vorrichtung 10 von Figur 1 mit einem Sensorelement 30 zu einer Referenzierung einer Stellvorrichtung 22. Bei der Referenzierung wird ein Stellelement der Stellvorrichtung 22 gegen einen mechanischen Anschlag gefahren. Durch die Referenzierung wird sichergestellt, dass das Stellelement eine definierte Basisposition einnimmt. Anschließend wird in der Regel das Stellelement vom Anschlag weg (also in entgegengesetzte Richtung) in eine vorgegebene Grundstellung zur Variation der Charakteristik des vom Scheinwerfer ausgesandten Lichtbündels (Realisierung einer dynamischen Lichtverteilung) bewegt.

In Figur 2 ist das Sensorelement 30 z.B. als ein Hall-Sensor ausgebildet, mit dem das Erreichen des Stellelements am Anschlag überwacht wird. Diese Maßnahme ist aus den Stand der Technik bekannt, ist aber eine kostenintensive Lösung.

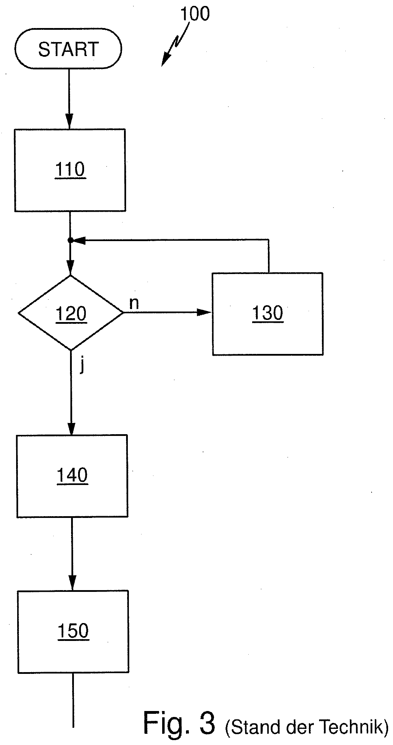

Das prinzipielle Verfahren einer aus dem Stand der Technik bekannten Referenzierung ist in Figur 3 dargestellt. Im bekannten Verfahren 100 wird die Stellvorrichtung 22 oder Teile davon in Schritt 110 mit einer Zielvorgabe, die größer ist als ein max. Stellweg des Stellelements, in Richtung des mechanischen Anschlags gefahren. In der Abfrage 120 wird innerhalb einer Sollzeitdauer abgefragt, ob die Zielvorgabe erreicht ist. Gleiches könnte auch durch Herunterzählen einer Soll-Schrittanzahl des Schrittmotors erzielt werden. Das Erreichen des Anschlags wird über den Hall-Sensor 30 ermittelt. Ist die Sollzeitdauer noch nicht abgelaufen bzw. die Soll-Schrittanzahl nicht = 0, läuft das System in einer Schleife (Herunterzählen der Soll-Vorgabe in Schritt 130).Wird während des Ablaufs der Schleife der Anschlag erreicht, kann die Referenzierung erfolgreich abgeschlossen werden; dazu werden im Schritt 140 die Treibereinstellungen (z.B. interne Schrittzähler) und/oder interne Positionszähler zurückgesetzt. Jedoch entsteht nach Erreichen des Anschlags durch den Nachlauf bis zum Ablauf der Zielvorgabe durch das wiederholte Anschlagen des Stellelements an den Anschlag ein störendes, ratterndes Geräusch. Dabei verliert der Schrittmotor 27 in der Regel seine Synchronität. Bei einem Nichterreichen des Anschlags innerhalb der Sollzeitdauer bzw. der Soll-Schrittanzahl wird eine Fehlermeldung abgesetzt.

Anschließend wird in Schritt 150 das Stellelement um eine vorgegebene Anzahl Schritte des Schrittmotors 27 vom Anschlag weg (also in entgegengesetzter Richtung) in eine vorgegebene Grundstellung zur Variation der Charakteristik des vom Scheinwerfer ausgesandten Lichtbündels (z.B. zur Leuchtweitenregulierung oder zum dynamischen Kurvenlicht) bewegt. Aus dieser Grundstellung heraus regelt das Steuergerät 12 die gewünschte dynamische Lichtverteilung.

Bekannt ist auch, dass eine elektrische Verstellung gemäß einer Vorgabe ohne Berücksichtigung des wirklichen Erreichen des Anschlages durchgeführt wird. Es wird dabei davon ausgegangen, dass das Stellelement die Referenzposition eingenommen hat.

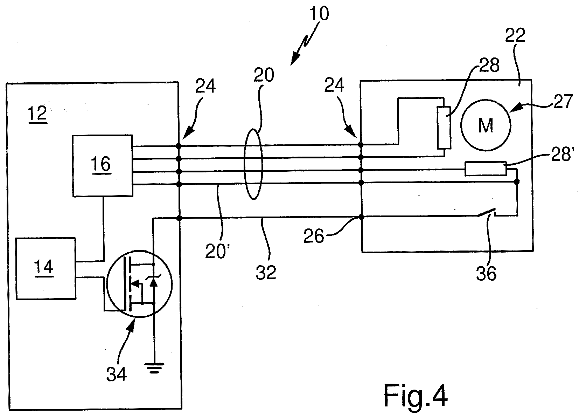

Figur 4 zeigt schematisch eine erfindungsgemäße Vorrichtung 10 zum Betreiben einer elektrischen, erfindungsgemäßen Stellvorrichtung 22 zur Variation einer Charakteristik eines von einem Scheinwerfer eines Kraftfahrzeugs (z.B. zur Leuchtweitenregulierung oder zum dynamischen Kurvenlicht) ausgesandten Lichtbündels. Der grundsätzliche Aufbau der Vorrichtung 10 unterscheidet sich zunächst im Wesentlichen nicht von der bekannten Vorrichtung 10 aus dem Stand der Technik. Das bedeutet, dass das Steuergerät 12 einen Mikroprozessor 14 und eine Treibereinrichtung 16 umfasst, wodurch der Schrittmotor 27 der Stellvorrichtung 22 über die Steuerleitungen 20 gesteuert bzw. geregelt wird. Die Steuerleitungen 20 sind an den Pins 24 angeschlossen.

In der erfindungsgemäßen Vorrichtung 10 wird der im Stand der Technik unbelegte Pin 26 zum Anschluss einer zusätzlichen Steuerleitung 32 genutzt. Die Steuerleitung 32 verbindet einen im Steuergerät 12 angeordneten Transistor 34, bevorzugt ein als MOSFET ausgebildeter selbstsperrender Transistor 34, mit einem elektrischen Eingang der Magnetspule 28'. Ein schaltbarer Pfad des Transistors 34 ist dabei Teil der Steuerleitung 32, d.h. die Steuerleitung 32 kann über den Transistor 34 geöffnet (Transistor niederohmig) oder geschlossen (Transistor hochohmig) werden. Im geöffneten Zustand ist die Anschlussleitung 32 über den Transistor 34 geerdet.

Außerdem weist die Anschlussleitung 32 ein Schaltelement 36 auf, das integraler Teil der Schaltvorrichtung 22 und in Reihe mit den Transistor 34 geschaltet ist. Das Schaltelement 36 wird durch Betätigung der Schaltvorrichtung 22 geöffnet oder geschlossen. Bei niederohmig geschaltetem Transistor 34 und bei geschlossenem Schaltelement 36 ist damit die Magnetspule 28' geerdet und nicht mehr über zwei Anschlussleitungen 20 mit dem Steuergerät 12 elektrisch betriebbereit verbunden. Die Anschlussleitung 20' der Magnetspule 28' ist in diesem Zustand über die weitere Anschlussleitung 32 kurzgeschlossen. Ist entweder der Transistor 34 hochohmig geschaltet oder das Schaltelement 36 geöffnet, kann die Vorrichtung 10 gemäß Figur 1 betrieben werden, was dem Normalbetrieb der Stellvorrichtung 22 entspricht. Die Ausgestaltung von Figur 4 bietet außerdem die Möglichkeit, durch Aktivierung des Transistors 34 bei Bedarf zu prüfen, ob das Schaltelement 36 im Anschlag steht oder nicht.

Die Figuren 5 und 6 zeigen das Schaltelement 36 in einer perspektivischen Darstellung. Das Schaltelement 36 arbeitet mit einem stabförmig ausgebildeten Betätigungselement 40 zusammen, wobei das Betätigungselement 40 senkrecht zu einem Flansch 38 angeordnet ist und diesen in einem Zentralbereich durchdringt. In einer bevorzugten Ausführungsform ist das Betätigungselement 40 in den Flansch 38 integriert; ein auf den Flansch 38 oder dem Schrittmotor 27 aufgestecktes Betätigungselement 40 ist alternativ auch möglich. In den Figuren 5 und 6 ist der Flansch 38 unmittelbar an dem Schrittmotor 27 angeordnet.

Das Betätigungselement 40 ist im Flansch 38 linear beweglich (siehe Bezugszeichen 41) und in einer zylindrischen Hülse 42 aus dem Flansch 38 heraus geführt. Eine Antriebsumsetzeinrichtung (nicht sichtbar) ist im Schrittmotor 27 integriert und setzt eine Rotationsbewegung des Schrittmotors 27 in eine Linearbewegung des Betätigungselements 40 um. Am freien Ende des Betätigungselements 40 ist ein Kugelkopf 43 angeordnet, der mit einem beweglichen Teil des Lichtmoduls 3 des Scheinwerfers 2 verbunden ist (in den Figuren 5 und 6 nicht dargestellt). Der bewegliche Teil des Scheinwerfers 2 ist durch die lineare Bewegung des Betätigungselements 40 bevorzugt horizontal (z.B. zur Realisierung das dynamische Kurvenlichts) oder vertikal (z.B. zur Realisierung der Leuchtweitenregulierung) um eine jeweilige Drehachse schwenkbar.

An einer Außenseite des Schrittmotors 27 und teilweise auf dem Umfang des Flansches 42 ist das Steuergerät 12 angeordnet. Die vier Anschlussleitungen 20 verbinden über die Pins 24 das Steuergerät 12 mit dem Schrittmotor 27 (nicht sichtbar).

Die Anschlussleitung 32 ist ebenfalls am Steuergerät 12 angeschlossen, sie ist jedoch an der Außenseite des Flansches 38 und der Hülse 42 verlegt, und zwar derart, dass zwei Enden der Anschlussleitung 32 an einer Stirnseite 44 der Hülse 42 enden. Die Anschlussleitung 32 ist also an der Stirnseite 44 unterbrochen; zumindest die an der Stirnseite 44 angeordneten Enden der Anschlussleitung 32 weisen keine elektrische Isolierung auf und stellen zwei Schaltkontakte 47 dar.

Das Schaltelement 36 umfasst im Wesentlichen zwei Teile: Einerseits ein auf dem linear beweglichen Betätigungselement 40 fixiertes und zylindrisch ausgebildetes Schaltelement 46 mit einer auf einer Stirnseite des Schaltelements 46 ebenen, elektrisch leitenden Kontaktfläche 48, die in Richtung der Hülse 42 zeigt, andererseits die beiden Schaltkontakte 47 der Anschlussleitung 32 an der Stirnseite 44. Durch die Betätigung der Stellvorrichtung 22 über das Steuergerät 12 kann das Betätigungselement 40 mit dem Schaltelement 46 und der Kontaktfläche 48 an die Stirnseite 44 der Hülse 42 gefahren werden, so dass die Kontaktfläche 48 die beiden Schaltkontakte 47 der Anschlussleitung 32 auf der Stirnseite 44 elektrisch verbindet. In diesem Zustand ist eine definierte Endposition zur Referenzierung der Stellvorrichtung 22 erreicht; die Stirnseite 44 stellt somit den mechanischen Anschlag für Kontaktelement 46 dar. Dabei können Drücke von bis zu 100N entstehen, die Kontaktfläche 48 und die Stirnseite 44 müssen derart ausgebildet sein, dass sie diesem Druck standhalten. Das Schaltelement 36 schließt dabei die Anschlussleitung 32 beim Erreichen des Anschlags elektrisch. Unmittelbar nach einem Zurückfahren des Stellelements 40 ist die Anschlussleitung 32 wieder unterbrochen.

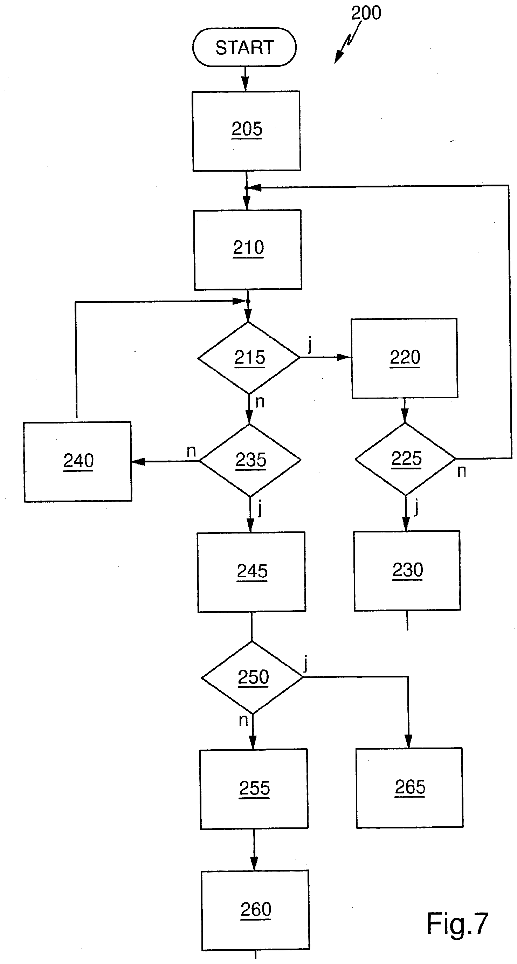

Figur 7 zeigt ein Flussdiagramm mit dem Ablauf des erfindungsgemäßen Verfahrens 200 zur Referenzierung der Stellvorrichtung 22. Das Verfahren 200 ist in dem Steuergerät 12 ablauffähig.

Nach dem Start des Referenzierungsverfahrens 200 wird im Schritt 205 der Transistor 34 niederohmig geschaltet und aktiviert damit das Schaltelement 36 in der zusätzlichen Anschlussleitung 32. Alle Kontroll- und Positionszähler und Treibereinstellungen (interne Schrittzähler des Schrittmotors) werden zurückgesetzt.

Im Schritt 210 wird der Schrittmotor 27 über die Steuerleitungen 20 derart vom Steuergerät 12 angesteuert, dass sich das Betätigungselement 40 - und damit auch das Kontaktelement 46 mit der Kontaktfläche 48 zur Stirnseite 44, also zum vorgesehenen definierten Anschlag zum Erreichen der Endposition, bewegt. Die dazu benötigten Schritte des Schrittmotors 27 müssen so bemessen sein ,dass das Kontaktelement 46 mit der Kontaktfläche 48 bei intakter Stellvorrichtung 22 aus jeder möglichen Position auf jeden Fall die Stirnseite 44 erreichen kann. Während des Anfahrens werden die benötigten Schritte des Schrittmotors 27 im Steuergerät 12 gezählt. Eine zeitliche Überwachung beim Schließen des Schaltelements 36 ist alternativ auch möglich.

In der Abfrage 215 werden die gezählten Schritte des Schrittmotors 27 mit einem vorgegebenen Sollwert (max. Anzahl Schritte) verglichen.

Ist in der Abfrage 215 der Sollwert erreicht, wird in Schritt 220 ein Kontrollzähler um den Wert "1" erhöht und anschließend in der Abfrage 225 ermittelt, ob der Wert des Kontrollzählers > 1 ist. Ist dies nicht der Fall, wird sicherheitshalber noch einmal zu Schritt 210 zurückgesprungen. Ist in der Abfrage 225 der Wert des Kontrollzählers > 1 (bedingt durch den zweiten Durchlauf), dann wird in Schritt 230 auf einen Defekt in der Stellvorrichtung 22, insbesondere auf eine Schwergängigkeit des Betätigungselements 40 geschlossen und die nötigen Verfahrensschritte zur Fehlerbehandlung eingeleitet.

Ist in der Abfrage 215 der Sollwert für die vorgesehenen Schritte des Schrittmotors 27 noch nicht erreicht, so wird in der Abfrage 235 ermittelt, ob ein elektrischer Fehler beim Betreiben der Stellvorrichtung 22 detektiert werden kann. Die dazu nötige Diagnoseroutine ist eine bereits im Stand der Technik im Steuergerät 12 bekannte Routine. Wird kein elektrischer Fehler erkannt, wird in Schritt 240 eine vorgegebene Wartezeit überwacht; das Verfahren läuft bis zum Ablauf der Wartezeit über die Schritte 215, 235 und 240 in einer Schleife, wobei laufend auf einen elektrischen Fehler geprüft wird.

Das Erreichen des Kontaktelements 46 mit der Kontaktfläche 48 an der Stirnfläche 44 löst durch das dadurch bedingte Durchschalten der zusätzlichen Steuerleitung 32 einen simulierten elektrischen Fehler (Erdung der Magnetspule 28') aus, der beim Durchlauf der Schritte 215, 235 und 240 in der Schleife als elektrischer Fehler detektiert wird. Unmittelbar nach dem Detektieren des elektrischen Fehlers schaltet das Steuergerät 12 den Schrittmotor 27 ab und den Transistor 34 auf einen hochohmigen Durchgang um, so dass die Anschlussleitung 32 wieder unterbrochen wird. Dabei wird das Schaltelement 36 sowie die zusätzliche Anschlussleitung 32 deaktiviert. Für das Steuergerät 12 herrschen so wieder normale Betriebsbedingungen zum Betreiben der Stellvorrichtung 22.

Im Schritt 250 wird anschließend im Steuergerät 12 nochmals eine Detektion auf einen elektrischen Fehler angestoßen. Wird bei dieser Prüfung kein elektrischer Fehler erkannt, so wird einerseits auf eine ordnungsgemäß arbeitende Stellvorrichtung 22 und andererseits auf das Erreichen der bestimmungsgemäßen Referenzposition für die Stellvorrichtung 22 geschlossen.

Anschließend werden im Schritt 255 alle Positionszähler und Treibereinstellungen (interne Schrittzähler des Schrittmotors) wieder zurückgesetzt, um nach dem Erreichen der Referenzposition des Stellelements 40 auf einer definierten Basis zum Betreiben der gewünschten adaptiven Lichtverteilung aufbauen zu können.

Dazu wird in Schritt 260 das Betätigungselement 40 vom Anschlag 44 weg (also in entgegengesetzte Richtung) in eine vorgegebene Grundstellung zum Betreiben der dynamischen Lichtverteilung bewegt. Die Grundstellung kompensiert im Wesentlichen Toleranzen, die bei der Fertigung und Montage des Scheinwerfers 2 bzw. des Lichtmoduls 3 auftreten.

Wird bei der Prüfung im Schritt 250 nochmals ein elektrischer Fehler erkannt, so wird auf einen nicht simulierten, elektrischen Fehler in der Stellvorrichtung 22 geschlossen und in Schritt 265 die nötigen Verfahrensschritte zur Behandlung des elektrischen Fehlers eingeleitet.

Das erfindungsgemäße Verfahren 200 wird vorzugsweise nach jedem Aktivieren des Scheinwerfers 2 ausgeführt, so dass beim Betreiben des Scheinwerfers 2 immer auf der definierten Referenzposition aufgebaut werden kann und eine ordnungsgemäße Funktion der Stellvorrichtung 22 sichergestellt wird.

## Patentansprüche

1. Verfahren zum Betreiben einer elektrischen Stellvorrichtung (22), die zur Variation einer Charakteristik eines von einem Lichtmodul (3) eines Scheinwerfers (2) eines Kraftfahrzeugs ausgesandten Lichtbündels dient, wobei die Stellvorrichtung (22) oder mindestens ein Teil davon im Rahmen einer Referenzierung zur Ermittlung einer Referenzposition der Stellvorrichtung (22) ausgehend von einer beliebigen Ausgangsposition in eine definierte Endposition bewegt und die Endposition als Referenzposition herangezogen wird, **dadurch gekennzeichnet, dass**
- während der Bewegung der Stellvorrichtung (22) von der Ausgangsposition in die Endposition ein Schaltelement (36) der Stellvorrichtung (22) aktiviert wird,
- beim Erreichen der Endposition das Schaltelement (36) automatisch schließt und ein elektrischer Defekt der Stellvorrichtung (22) erzeugt wird,
- der elektrische Defekt der Stellvorrichtung (22) von einer zur Ansteuerung der Stellvorrichtung (22) eingesetzten Treibereinrichtung (16) mit einer internen Diagnosemöglichkeit zur Detektion elektrischer Defekte der Stellvorrichtung (22) detektiert und infolge dessen die Bewegung der Stellvorrichtung (22) beendet und das Schaltelement (36) deaktiviert wird,
- die Stellvorrichtung (22) nochmals auf das Vorhandensein des elektrischen Defekts überprüft wird, und
- die aktuelle Position der Stellvorrichtung (22) als Referenzposition herangezogen wird, falls der elektrische Defekt nach der Deaktivierung des Schaltelements (36) nicht mehr vorhanden ist.

2. Verfahren nach Anspruch 1, **dadurch gekennzeichnet, dass** die Stellvorrichtung (22) einen Elektromotor (27) mit mindestens einer Spule (28, 28') umfasst und dass durch das geschlossene Schaltelement (36) ein Kurzschluss in der Spule (28') oder in mindestens einer der Spulen (28, 28') als elektrischer Defekt der Stellvorrichtung (22) erzeugt wird.

3. Verfahren nach Anspruch 1 oder 2, **dadurch gekennzeichnet, dass** das Schaltelement (36) mittels eines elektrisch ansteuerbaren Schalters, insbesondere eines Transistors, aktiviert und deaktiviert wird.

4. Verfahren nach einem der Ansprüche 1 bis 3, **dadurch gekennzeichnet, dass** zu Beginn der Bewegung der Stellvorrichtung (22) ausgehend von der Ausgangsposition in die Endposition ein Zeitgeber gestartet wird und geprüft wird, ob die Endposition innerhalb einer vorgebbaren Zeitdauer erreicht wird.

5. Verfahren nach einem der Ansprüche 1 bis 3, **dadurch gekennzeichnet, dass** zu Beginn der Bewegung der Stellvorrichtung (22) ausgehend von der Ausgangsposition in die Endposition ein Schrittzähler initialisiert wird und geprüft wird, ob die Endposition innerhalb einer vorgebbaren Anzahl von Schritten erreicht wird.

6. Verfahren nach einem der Ansprüche 1 bis 5, **dadurch gekennzeichnet, dass** die Stellvorrichtung (22) mit einem Steuergerät (12) in Verbindung steht, durch das die Stellvorrichtung (22) angesteuert wird.

7. Verfahren nach Anspruch 6, **dadurch gekennzeichnet, dass** durch das Steuergerät (12) eine oder mehrere der nachfolgenden Aktionen durchgeführt wird:
- Aktivierung bzw. Deaktivierung des Schaltelements (36),
- Bewegung der Stellvorrichtung (22),
- Detektion des elektrischen Defekts der Stellvorrichtung (22),
- Ermittlung, ob die Endposition erreicht wurde,
- Heranziehen der Endposition als Referenzposition, und
- Ansteuerung der Stellvorrichtung (22) im Rahmen der Variation der Charakteristik des von dem Lichtmodul (3) des Scheinwerfers (2) ausgesandten Lichtbündels im Anschluss an die Referenzierung.

8. Kraftfahrzeugscheinwerfer (2) mit einem Lichtmodul (3) zum Aussenden eines Lichtbündels, mit einer elektrischen Stellvorrichtung (22) zur Variation einer Charakteristik des Lichtbündels und mit einem Steuergerät (12) zur Ansteuerung der Stellvorrichtung (22), wobei das Steuergerät (12) zur Ermittlung einer Referenzposition der Stellvorrichtung (22) im Rahmen einer Referenzierung ausgebildet ist, wobei das Steuergerät (12) eine Bewegung der Stellvorrichtung (22) ausgehend von einer beliebigen Ausgangsposition in eine definierte Endposition veranlasst und die Endposition als Referenzposition heranzieht, und wobei das Steuergerät (12) eine zur Ansteuerung der Stellvorrichtung (22) eingesetzte Treibereinrichtung (16) mit einer internen Diagnosemöglichkeit zur Detektion elektrischer Defekte der Stellvorrichtung (22) aufweist, **dadurch gekennzeichnet, dass** die Stellvorrichtung (22) ein Schaltelement (36) aufweist, das beim Erreichen der Endposition automatisch schließt und einen elektrischen Defekt der Stellvorrichtung (22) erzeugt, dass das Steuergerät (12) dazu ausgebildet ist, während der Bewegung der Stellvorrichtung (22) von der Anfangsposition in die Endposition das Schaltelement (36) zu aktivieren, dass die Treibereinrichtung (16) dazu ausgebildet ist, den elektrischen Defekt der Stellvorrichtung (22) zu detektieren und die Bewegung der Stellvorrichtung (22) zu beenden, und dass das Steuergerät (12) des Weiteren dazu ausgebildet ist, das Schaltelement (36) zu deaktivieren, die Stellvorrichtung (22) nochmals auf das Vorhandensein des elektrischen Defekts zu überprüfen und die aktuelle Position der Stellvorrichtung (22) als Referenzposition heranzuziehen, falls der elektrische Defekt nach der Deaktivierung des Schaltelements (36) nicht mehr vorhanden ist.

9. Scheinwerfer (2) nach Anspruch 8, **dadurch gekennzeichnet, dass** die Stellvorrichtung (22) einen Elektromotor (27) mit mindestens einer Spule (28, 28') umfasst und dass der durch das geschlossene Schaltelement (36) erzeugte elektrische Defekt der Stellvorrichtung (22) ein Kurzschluss in der Spule (28') oder in mindestens einer der Spulen (28, 28') ist.

10. Scheinwerfer (2) nach Anspruch 8 oder 9, **dadurch gekennzeichnet, dass** der Scheinwerfer (2) einen elektrisch ansteuerbaren Schalter, insbesondere einen Transistor, zur Aktivierung und Deaktivierung des Schaltelements (36) aufweist.

11. Scheinwerfer (2) nach einem der Ansprüche 8 bis 10, **dadurch gekennzeichnet, dass** der Scheinwerfer (2) einen Zeitgeber zur Überprüfung, ob die Endposition innerhalb einer vorgebbaren Zeitdauer erreicht ist, aufweist.

12. Scheinwerfer (2) nach einem der Ansprüche 8 bis 10, **dadurch gekennzeichnet, dass** der Scheinwerfer (2) einen Schrittzähler zur Überprüfung, ob die Endposition innerhalb einer vorgebbaren Anzahl von Schritten erreicht ist, aufweist.

13. Scheinwerfer (2) nach einem der Ansprüche 8 bis 12, **dadurch gekennzeichnet, dass** das Schaltelement (36) integraler Bestandteil der Stellvorrichtung (22) ist.

14. Scheinwerfer (2) nach Anspruch 13, **dadurch gekennzeichnet, dass** die Stellvorrichtung (22) einen Elektromotor (27) und einen Spindeltrieb zum Umsetzen der Drehbewegung eines Rotors des Elektromotors (27) in eine Linearbewegung eines Betätigungselements (40) der Stellvorrichtung (22) aufweist, das Schaltelement (36) einen ersten, dem bewegbaren Betätigungselement (40) zugeordneten Schaltkontakt (48) und zwei zweite, einem statischen Teil der Stellvorrichtung (22) zugeordnete Schaltkontakte (32) aufweist, wobei in der Endposition der Stellvorrichtung (22) der erste Schaltkontakt (48) eine elektrisch leitende Verbindung zwischen den zweiten Schaltkontakten (32) erzeugt.

## Claims

1. A method for operating an electrical actuator (22) which is used for varying a characteristic of a light beam emitted by a light module (3) of a headlamp (2) of a motor vehicle, wherein, within the scope of a referencing operation for determining a reference position of the actuator (22), the actuator (22) or at least a part thereof is moved starting from any starting position to a defined end position and the end position is used as the reference position,
**characterized in that**
- a switching element (36) of the actuator (22) is activated during the movement of the actuator (22) from the starting position into the end position,
- upon reaching of the end position, the switching element (36) automatically closes and an electrical defect of the actuator (22) is generated,
- the electrical defect of the actuator (22) is detected by a driver device (16) which is used to drive the actuator (22) and which has an internal diagnostic facility for detecting electrical defects of the actuator (22), and consequently, the movement of the actuator (22) is stopped and the switching element (36) is deactivated,
- the actuator (22) is checked again for the presence of the electrical defect, and
- a current position of the actuator (22) is used as the reference position if the electrical defect is no longer present after deactivation of the switching element (36).

2. The method according to claim 1, **characterized in that** the actuator (22) comprises an electric motor (27) with at least one coil (28, 28'), and **in that** a short circuit is generated in the coil (28') or in at least one of the coils (28, 28') by the closed switching element (36) as an electrical defect of the actuator (22).

3. The method according to claim 1 or 2, **characterized in that** the switching element (36) is activated and deactivated by means of an electrically controllable switch, in particular a transistor.

4. The method according to one of the claims 1 to 3, **characterized in that** at the beginning of the movement of the actuator (22) starting from the starting position to the end position a timer is started, and it is checked whether the end position is reached within a settable time period.

5. The method according to one of the claims 1 to 3, **characterized in that** at the beginning of the movement of the actuator (22) starting from the starting position to the end position a step counter is initialized, and it is checked whether the end position is reached within a settable number of steps.

6. The method according to one of the claims 1 to 5, **characterized in that** the actuator (22) is in connection with a control device (12) which drives the actuator (22).

7. The method according to claim 6, **characterized in that** one or more of the following operations is carried out by the control device (12):
- activating or deactivating the switching element (36),
- moving the actuator (22),
- detecting the electrical defect of the actuator (22),
- determining whether the end position has been reached,
- using the end position as the reference position, and
- subsequently to the referencing operation, driving the actuator (22) within the scope of the variation of the characteristic of the light beam emitted by the light module (3) of the headlamp (2).

8. A motor vehicle headlamp (2) comprising a light module (3) for emitting a light beam, an electrical actuator (22) for varying a characteristic of the light beam, and a control device (12) for driving the actuator (22), wherein the control device (12) is configured to determine a reference position of the actuator (22) within the scope of a referencing operation, wherein the control device (12) causes the actuator (22) to move starting from any starting position to a defined end position and uses the end position as a reference position, and wherein the control device (12) comprises a driver device (16) which is used to drive the actuator (22) and has an internal diagnostic facility for detecting electrical defects of the actuator (22),
**characterized in that**
the actuator (22) comprises a switching element (36) which automatically closes upon reaching of the end position and generates an electrical defect of the actuator (22),
the control device (12) is configured to activate the switching element (36) during the movement of the actuator (22) from the starting position to the end position,
the driver device (16) is configured to detect the electrical defect of the actuator (22) and to stop the movement of the actuator (22), and
the control device (12) is further configured to deactivate the switching element (36), to check again the actuator (22) for the presence of the electrical defect, and to use the current position of the actuator (22) as the reference position if the electrical defect is no longer present after deactivation of the switching element (36).

9. The headlamp (2) according to claim 8, **characterized in that** the actuator (22) comprises an electric motor (27) with at least one coil (28, 28'), and **in that** the electrical defect of the actuator (22) generated by the closed switching element (36) is a short circuit in the coil (28') or in at least one of the coils (28, 28').

10. The headlamp (2) according to claim 8 or 9, **characterized in that** the headlamp (2) comprises an electrically controllable switch, in particular a transistor, for activating and deactivating the switching element (36).

11. The headlamp (2) according to one of the claims 8 to 10, **characterized in that** the headlamp (2) comprises a timer for checking whether the end position has been reached within a settable time period.

12. The headlamp (2) according to one of the claims 8 to 10, **characterized in that** the headlamp (2) comprises a step counter for checking whether the end position has been reached within a settable number of steps.

13. The headlamp (2) according to one of the claims 8 to 12, **characterized in that** the switching element (36) is an integral component of the actuator (22).

14. The headlight (2) according to claim 13, **characterized in that**
the actuator (22) comprises an electric motor (27) and a ball screw drive for converting the rotary movement of a rotor of the electric motor (27) into a linear movement of an actuating element (40) of the actuator (22),
the switching element (36) comprises a first switching contact (48) assigned to the movable actuating element (40) and two second switching contacts (32) assigned to a static part of the actuator (22),
wherein in the end position of the actuator (22), the first switching contact (48) generates an electrically conductive connection between the second switching contacts (32).

## Revendications

1. Procédé pour faire fonctionner un dispositif de réglage (22) électrique, qui sert à modifier une caractéristique d'un faisceau lumineux émis par un module lumineux (3) d'un projecteur (2) d'un véhicule à moteur, dans lequel le dispositif de réglage (22) ou au moins une partie de celui-ci, dans le cadre d'un référencement destiné à déterminer une position de référence du dispositif de réglage (22), se déplace d'une position de départ quelconque dans une position finale définie et la position finale est utilisée comme position de référence, **caractérisé en ce que**
- pendant le déplacement du dispositif de réglage (22) de la position de départ dans la position finale, un élément de commutation (36) du dispositif de réglage (22) est activé,
- lorsque la position finale est atteinte, l'élément de commutation (36) se ferme automatiquement et un défaut électrique du dispositif de réglage (22) est produit,
- le défaut électrique du dispositif de réglage (22) est détecté par un dispositif de pilotage (16) utilisé pour commander le dispositif de réglage (22) et présentant une capacité de diagnostic interne permettant la détection de défauts électriques du dispositif de réglage (22) et, à la suite de cela, on met fin au déplacement du dispositif de réglage (22) et l'élément de commutation (36) est désactivé,
- le dispositif de commande (22) est contrôlé encore une fois pour rechercher la présence du défaut électrique, et
- la position actuelle du dispositif de réglage (22) est utilisée comme position de référence, au cas où le défaut électrique ne serait plus présent après la désactivation de l'élément de commutation (36).

2. Procédé selon la revendication 1, **caractérisé en ce que** le dispositif de réglage (22) comprend un moteur électrique (27) pourvu d'au moins une bobine (28, 28') et **en ce que**, du fait de l'élément de commutation (36) fermé, un court-circuit est généré dans la bobine (28') ou dans au moins une des bobines (28, 28') en tant que défaut électrique du dispositif de réglage (22).

3. Procédé selon la revendication 1 ou 2, **caractérisé en ce que** l'élément de commutation (36) est activé et désactivé au moyen d'un commutateur à commande électrique, en particulier d'un transistor.

4. Procédé selon l'une quelconque des revendications 1 à 3, **caractérisé en ce qu'**au début du déplacement du dispositif de réglage (22) de la position de départ à la position finale, un minuteur est démarré et on vérifie si la position finale est atteinte pendant une durée pouvant être prédéfinie.

5. Procédé selon l'une quelconque des revendications 1 à 3, **caractérisé en ce qu'**au début du déplacement du dispositif de réglage (22) de la position de départ à la position finale, un compteur pas à pas est initialisé et on vérifie si la position finale peut être atteinte sur un nombre de pas pouvant être prédéfini.

6. Procédé selon l'une quelconque des revendications 1 à 5, **caractérisé en ce que** le dispositif de réglage (22) est relié à un appareil de commande (12), par l'intermédiaire duquel le dispositif de réglage (22) est commandé.

7. Procédé selon la revendication 6, **caractérisé en ce que** l'appareil de commande (12) permet de réaliser une ou plusieurs des actions suivantes :
- l'activation ou la désactivation de l'élément de commutation (36),
- le déplacement du dispositif de réglage (22),
- la détection du défaut électrique du dispositif de réglage (22),
- le fait de déterminer si la position finale a été atteinte,
- l'utilisation de la position finale comme position de référence, et
- la commande du dispositif de réglage (22) dans le cadre de la modification de la caractéristique du faisceau lumineux émis par le module lumineux (3) du projecteur (2) à la suite du référencement.

8. Projecteur de véhicule à moteur (2) pourvu d'un module lumineux (3) destiné à émettre un faisceau lumineux, d'un dispositif de réglage (22) électrique destiné à modifier une caractéristique du faisceau lumineux et d'un appareil de commande (12) destiné à commander le dispositif de réglage (22), dans lequel l'appareil de commande (12) est conçu pour déterminer une position de référence du dispositif de réglage (22) dans le cadre d'un référencement, dans lequel l'appareil de commande (12) provoque un déplacement du dispositif de réglage (22) d'une position de départ quelconque dans une position finale définie et utilise la position finale comme position de référence, et dans lequel l'appareil de commande (12) présente un dispositif de pilotage (16) utilisé pour commander le dispositif de réglage (22) et pourvu d'une capacité de diagnostic interne permettant la détection de défauts électriques du dispositif de réglage (22), **caractérisé en ce que** le dispositif de réglage (22) présente un élément de commutation (36) qui se ferme automatiquement une fois la position finale atteinte et qui génère un défaut électrique du dispositif de réglage (22), **en ce que** l'appareil de commande (12) est conçu pour activer l'élément de commutation (36) pendant le déplacement du dispositif de réglage (22) de la position de départ dans la position finale, **en ce que** le dispositif de pilotage (16) est conçu pour détecter le défaut électrique du dispositif de réglage (22) et pour mettre fin au déplacement du dispositif de réglage (22), et **en ce que** l'appareil de commande (12) est conçu en outre pour désactiver l'élément de commutation (36), pour contrôler encore une fois le dispositif de réglage (22) afin de rechercher la présence du défaut électrique et pour utiliser la position actuelle du dispositif de réglage (22) comme position de référence, au cas où le défaut électrique ne serait plus présent après la désactivation de l'élément de commutation (36).

9. Projecteur (2) selon la revendication 8, **caractérisé en ce que** le dispositif de réglage (22) comprend un moteur électrique (27) pourvu d'au moins une bobine (28, 28') et **en ce que** le défaut électrique du dispositif de réglage (22) généré par l'élément de commutation (36) fermé est un court-circuit dans la bobine (28') ou dans au moins une des bobines (28, 28').

10. Projecteur (2) selon la revendication 8 ou 9, **caractérisé en ce que** le projecteur (2) présente un commutateur à commande électrique, en particulier un transistor, pour l'activation et la désactivation de l'élément de commutation (36).

11. Projecteur (2) selon l'une quelconque des revendications 8 à 10, **caractérisé en ce que** le projecteur (2) présente un minuteur destiné à contrôler si la position finale est atteinte pendant une durée pouvant être prédéfinie.

12. Projecteur (2) selon l'une quelconque des revendications 8 à 10, **caractérisé en ce que** le projecteur (2) présente un compteur pas à pas destiné à contrôler si la position finale est atteinte sur un nombre de pas pouvant être prédéfini.

13. Projecteur (2) selon l'une quelconque des revendications 8 à 12, **caractérisé en ce que** l'élément de commutation (36) fait partie intégrante du dispositif de réglage (22).

14. Projecteur (2) selon la revendication 13, **caractérisé en ce que** le dispositif de réglage (22) présente un moteur électrique (27) et un mécanisme à broche destiné à convertir le mouvement de rotation d'un rotor du moteur électrique (27) en mouvement linéaire d'un élément d'actionnement (40) du dispositif de réglage (22), l'élément de commutation (36) présente un premier contact de commutation (48) associé à l'élément d'actionnement (40) mobile et deux deuxièmes contacts de commutation (32) associés à une partie statique du dispositif de réglage (22), dans lequel, dans la position finale du dispositif de réglage (22), le premier contact de commutation (48) génère une liaison électro-conductrice entre les deux contacts de commutation (32).
